# EUROPÄISCHE PATENTSCHRIFT

(11) **EP 0 554 766 B1**
(45) Veröffentlichungstag und Bekanntmachung des Hinweises auf die Patenterteilung: **27.03.1996**
(21) Anmeldenummer: 93101156.3
(22) Anmeldetag: 27.01.1993
(51) Int. Cl.: B01D 53/56

(54) **Verfahren zur Stickoxidminderung in Abgasen durch gesteuerte NH3-Zugabe**
Process for reducing the nitrogen oxide content in exhaust gases by the controlled addition of NH3
Procédé de réduction de la teneur en oxydes d'azote dans des gaz d'échappement par l'addition contrôlée de NH3

(30) Priorität: 05.02.1992 DE 4203219
(43) Veröffentlichungstag der Anmeldung: 11.08.1993
(73) Patentinhaber: BASF Aktiengesellschaft, D-67063 Ludwigshafen (DE); MERCEDES-BENZ AG, D-70327 Stuttgart (DE)
(72) Erfinder: Morsbach, Bernd, W-6700 Ludwigshafen (DE); Daudel, Helmut, W-7060 Schorndorf (DE); Gaertner, Uwe, W-7056 Weinstadt (DE)

(56) Entgegenhaltungen:
- EP-A- 0 277 765
- EP-A- 0 515 857
- WO-A-83/00057
- DE-A- 3 337 793
- DE-A- 3 615 021
- DE-A- 3 721 572
- DE-A- 3 740 675

## Beschreibung

Die Erfindung betrifft ein Verfahren zur selektiven katalytischen Reduktion von Stickoxiden aus Abgasen, vorzugsweise aus Abgasen von Kraftfahrzeugdieselmotoren unter getakteter überstöchiometrischer Zugabe von NH₃ oder NH₃-freisetzenden Stoffen.

Die Stickoxidemissionen in den modernen Industriestaaten werden durch die Emittenten, Verkehr, fossil befeuerte Kraftwerke und Industrieanlagen bestimmt. Während die Kraftwerks- und Industrieemissionen durch den Bau entsprechender Abgasreinigungsanlagen zurückgehen, tritt der Anteil des Verkehrs immer mehr in den Vordergrund. Daneben sind Minderungsmaßnahmen an kleineren Gasquellen und der Betrieb bei Temperaturen zwischen 100°C und 300°C zunehmend von Bedeutung.

Beim Benzinmotor können die Stickoxide auf bekannte Weise durch einen Drei-Wege-Katalysator bei stöchiometrischer Fahrweise reduziert werden, wobei die unverbrannten bzw. teiloxidierten Komponenten des Abgases als Reduktionsmittel für die gebildeten Stickoxide idealerweise im stöchiometrischen Verhältnis zur Verfügung stehen.

Beim gemischgeregelten Dieselmotor ist diese Art der Stickoxidminderung durch die prinzipbedingt überstöchiometrische Fahrweise nicht möglich. Andererseits haben die Stickoxidemissionen aus Dieselmotoren, insbesondere aus den im Nutzfahrzeugbereich dominierenden verbrauchsgünstigen Direkteinspritzern einen hohen Anteil an den Gesamtemissionen.

Aus der DE 24 58 888 ist ein Katalysator bekannt, mit dem Stickoxide unter Zusatz von NH₃ als Reduktionsmittel selektiv zu Stickstoff und Wasser umgesetzt werden. Dieser Katalysator wird in großem Umfang eingesetzt in einem Verfahren zur Stickoxidminderung von Kraftwerksabgasen, bei dem dem Rauchgas, bezogen auf den gewünschten Umsatz, NH₃ im stöchiometrischen Verhältnis kontinuierlich zugegeben wird.

Dieses Verfahren ist in zahlreichen Veröffentlichungen beschrieben. Zur Regelung der NH₃-Dosierung ist bei diesem Verfahren eine Messung der NOₓ-Eintritts- und Austrittskonzentration neben der Bestimmung der Rauchgasmenge erforderlich.

Diese Regelung hat sich bei dem im Kraftwerksbereich auftretenden langsamen Abgasmengen- und NOₓ-Konzentrationsänderungen als vorteilhaft erwiesen, ist jedoch für die außerordentlich starken und schnellen Mengen- und Konzentrationsänderungen, wie sie im Betrieb eines Nutzfahrzeugdieselmotors auftreten, aufgrund der großen Zeitkonstanten der Regelung ungeeignet. Weiterhin führt diese Regelung im Bereich niedriger Temperaturen (100°C bis 300°C) zu einer schlechten Ausnutzung des Katalysatormaterials, wodurch sehr große Katalysatorvolumina erforderlich sind.

In der Zeitschrift "Chemical Engineering Science", Jahrgang 43, 1988, Nr. 8, Seiten 2073 bis 2078, Artikel "Extended Reactor Concept for Dynamic Denox Design", wird dargestellt, daß eine adsorptive Beladung des Katalysators mit NH₃ unter anschließender Arbeitsphase, in der das adsorbierte NH₃ mit dem NOₓ des zu behandelnden Gases abreagiert, von Vorteil ist. Bei dieser Betriebsweise sind aufgrund der Vorbeladung des Katalysators mit NH₃ starke Schwankungen von Abgasmenge und NOₓ-Konzentration kein Problem. Nachteil dieses Verfahrens ist jedoch, daß die Durchströmungsrichtung durch den Katalysator periodisch umgekehrt werden muß, um einen definierten Beladungszustand des Katalysators zu erhalten.

Diesen Nachteil umgeht eine Regelung der NH₃-Dosierung, wie sie in der DE 38 25 206 beschrieben ist. Diese Regelung sieht eine getaktete überstöchiometrische Zudosierung des Reduktionsmittels NH₃ ohne Strömungsumkehr vor, erreicht jedoch in der beschriebenen Betriebsweise keinen definierten Beladungszustand des Katalysators, der für eine hohe NOₓ-Abscheideleistung des Katalysators bei Betrieb mit starken Schwankungen der Abgasmenge und der NOₓ-Konzentration im Abgas aber auch bei niedrigen Betriebstemperaturen erforderlich ist; ein Mangel, der auch durch die Messung beider NOₓ-Konzentrationen nicht ausgeglichen werden kann.

Die Nachteile dieser beiden beschriebenen Verfahren, periodische Strömungsumkehr bzw. undefinierter Beladungszustand des Katalysators machen den Einsatz derselben im Nutzfahrzeugbereich unpraktikabel.

Es wurde auch schon vorgeschlagen (EP-A- 0 515 857), zur selektiven katalytischen Reduktion von Abgasen aus Kraftfahrzeugdieselmotoren eine NH₃-Zugabe in der Weise zu steuern, daß die Gasphasenkonzentration von NH₃ innerhalb des Katalysatorbettes gemessen wird und in Abhängigkeit des Meßergebnisses die Dosierungsintervalle festgelegt werden. Dabei wird ein definierter Beladungszustand des Katalysators ausschließlich durch die NH₃₋Messung erfaßt. Ein vollständiges oder weitgehend vollständiges Abreagieren des gespeicherten NH₃ erfolgt nicht.

Mit der Erfindung soll ein Verfahren zur Minderung der Stickoxidemissionen von Kraftfahrzeugdieselmotoren geschaffen werden.

Diese Aufgabe wird dadurch gelöst, daß die getaktete überstöchiometrische NH₃-Zugabe in der Weise gesteuert wird, daß die Zugabe nach ihrem Start erst dann wieder unterbrochen wird, wenn die im Katalysator gespeicherte NH₃-Menge einen bestimmten, entsprechend den Katalysatoreigenschaften und dem Katalysatorvolumen vorgegebenen, oberen Schwellenwert erreicht hat, wobei die gespeicherte NH₃-Menge aus der Differenz zwischen der dosierten NH₃-Menge und der abgeschiedenen NOₓ-Menge, bestimmt aus der NOₓ-Konzentration im Abgas und dem durchschnittlichen Abscheidegrad, berechnet wird und die NH₃-Zugabe erst wieder erneut einsetzt, wenn die in gleicher Weise bestimmte, im Katalysator gespeicherte NH₃-Menge einen vorgegebenen unteren Schwellenwert erreicht hat, wobei diese getaktete NH₃-Zugabe nach einer vorbestimmten Anzahl von Zyklen so lange unterbrochen wird, bis die, auf die beschriebene Weise bestimmte, im Katalysator gespeicherte NH₃-Menge vollständig oder zumindest weitgehend abreagiert ist, womit ein Gesamtzyklus der getakteten NH₃-Zugabe abgeschlossen ist.

Bei dem erfindungsgemäßen Verfahren wird der Katalysator in einem Beladungsphase durch überstöchiometrische Zugabe von NH₃ mit NH₃ beladen. Durch diese Beladung bildet sich im Katalysator eine relativ steile NH₃-Adsorptionsfront aus, wie umfangreiche Untersuchungen gezeigt haben. Mit dem Fortschreiten dieser Adsorptionsfront im Katalysator nimmt die im Katalysator gespeicherte NH₃-Menge zu, die sich als Differenz zwischen der zugegebenen und der mit NOₓ abreagierten Menge berechnen läßt. Die Zugabe von NH₃ wird abgeschaltet, wenn die im Katalysator gespeicherte NH₃-Menge einen Wert erreicht hat, bei dem die Adsorptionsfront gerade so weit fortgeschritten ist, daß die zugehörige NH₃-Konzentration in der Gasphase im dahinterliegenden Teil des Katalysators durch Adsorption und Reaktion so abgesenkt wird, daß am Austritt des Katalysators keine unzulässigen Restkonzentrationen an NH₃ auftreten.

Diese NH₃-Menge ist durch Versuche oder reaktionskinetische Betrachtungen im einzelnen Anwendungsfall zu ermitteln und kann als fester Wert oder als Kennfeld in Abhängigkeit verschiedener Betriebsparameter festgelegt werden. Die dem Katalysator in einem Zyklus, d.h. in der Beladephase und der sich anschließenden Abreaktionsphase ohne NH₃-Zugabe vom Dieselmotor zugeführte NOₓ-Menge läßt sich aus den Motorbetriebsdaten Drehzahl und Regelstangenweg oder anderen Betriebsparametern unter Zuhilfenahme des bekannten Motorkennfeldes über die Zeit näherungsweise aufintegrieren. Für andere Abgasquellen sind im allgemeinen ähnliche näherungsweise Berechnungen anhand relevanter Parameter möglich.

Aus dieser NOₓ-Menge im Abgas läßt sich mit Hilfe eines mittleren Abscheidegrades die abreagierte NH₃-Menge bestimmen, so daß als Differenz zu der zugegebenen NH₃-Menge eine kontinuierliche Berechnung der im Katalysator gespeicherten NH₃-Menge möglich ist. Diese Berechnung läßt sich durch die Einbeziehung eines Kennfeldes des Abscheidegrades, welches die Abhängigkeit von den hauptsächlichen Parametern Drehzahl oder Abgasmenge, NOₓ im Abgas, Katalysatortemperatur und NH₃-Beladung darstellt, noch verfeinern.

Wenn diese mitlaufend berechnete, gespeicherte NH₃-Menge in der Abreaktionsphase einen vorgegebenen unteren Schwellenwert unterschritten hat, ist der erste Einzelzyklus beendet und der nächste Einzelzyklus wird in gleicher Weise durch erneute NH₃-Zugabe begonnen.

Da die gespeicherte NH₃-Menge nur indirekt errechnet und nicht durch eine Messung kontrolliert wird, ergibt sich zwangsläufig eine Diskrepanz zwischen errechneter und tatsächlich gespeicherter NH₃-Menge, die natürlicherweise mit jedem Einzelzyklus größer wird und entweder zu einer zu geringen Beladung mit zu geringen Abscheidegraden führt oder zu einer zu hohen Beladung mit einem Durchbruch von unreagiertem NH₃. Dieses Problem wird unter Umgehung einer Konzentrationsmessung erfindungsgemäß dadurch gelöst, daß nach einer vorgegebenen Anzahl von Einzelzyklen durch Abschaltung der NH₃-Zugabe die im Katalysator gespeicherte NH₃-Menge durch Reaktion mit NOₓ vollständig oder zumindest weitgehend aufgebraucht wird, wodurch wiederum ein definierter Beladungszustand erreicht wird. Diese Entladungsphase muß über den Zeitpunkt hinaus erfolgen, an dem rechnerisch kein NH₃ oder nur noch eine insgesamt vernachlässigbare Menge im Katalysator gespeichert ist, um die Differenzen zwischen errechnetem und tatsächlichem Beladungszustand des Katalysators abzugleichen, bevor mit der erneuten NH₃-Zugabe ein neuer Gesamtzyklus beginnt.

Diese Steuerung der NH₃-Zugabe kann erfindungsgemäß weiterhin verbessert werden, wenn hinter dem Katalysator eine Messung der NOₓ-Konzentration, beispielsweise als Emissionsmeßstelle, zur Verfügung steht, oder mit vertretbarem Aufwand installiert werden kann. Der am Ende eines Gesamtzykluses angestrebte definierte Beladungszustand des Katalysators kann in diesem Fall anstatt durch vollständiges Abreagieren des gespeicherten NH₃ mit NOₓ auch durch den Abfall der NOₓ-Abscheidung auf ein vorgegebenes Niveau bestimmt werden, was ebenfalls einem definierten Beladungszustand entspricht. Daraus ergibt sich erfindungsgemäß der Vorteil, daß die Entladungsphase beendet wird und die NH₃-Zugabe wieder einsetzen kann bevor die NOₓ-Abscheidung ganz zurückgeht, was unvermeidlich ist, wenn das gespeicherte NH₃ vollständig abreagiert. Auf diese Weise läßt sich eine deutliche Steigerung des mittleren Abscheidegrades erreichen.

Das vorgegebene Niveau der NOₓ-Abscheidung, das das Ende der Entladungsphase definiert, kann entweder als eine bestimmte NOₓ-Konzentration hinter dem Katalysator oder als ein bestimmter Abscheidegrad oder auch unter Zuhilfenahme des beschriebenen Abscheidungskennfeldes als bestimmter NH₃-Beladungszustand definiert werden.

Weiterhin ist es erfindungsgemäß möglich, die über einen Gesamtzyklus gemessene NOₓ-Konzentration hinter dem Katalysator und die zudosierte NH₃-Menge aufzuintegrieren und mit Hilfe dieser Werte eine NH₃-Bilanz über den Gesamtzyklus aufzustellen, die dann mit der mitlaufend errechneten NH₃-Beladung verglichen werden kann, wodurch im Sinne eines selbstlernenden Regelungssystemes eine Korrektur der der Rechnung zugrunde liegenden Kennfelder erfolgen kann. Dabei können Störungseinflüsse diese Korrekturen über das zu erwartende Maß ansteigen lassen. In diesem Fall kann erfindungsgemäß eine Begrenzung eintreten und eine Störungsmeldung von der Regelung abgegeben werden. Ergeben sich jedoch nur geringe Korrekturen, so ist erfindungsgemäß eine Anpassung der Zahl der Einzelzyklen eines Gesamtzykluses in der Weise möglich, daß bei guter Übereinstimmung der gemessenen mit den berechneten Werten die Zahl der Einzelzyklen erhöht bzw. bei schlechter Übereinstimmung erniedrigt werden kann.

Eine weitere Verbesserung der NH₃-Dosierung ist erfindungsgemäß durch eine Messung der NOₓ-Konzentration im Abgas möglich, da so die unvermeidlichen Fehler bei der Bestimmung dieser Konzentration und des Abscheidegrades aus den Kennfeldern vermieden werden können. Außerdem kann so der nicht unbeträchtliche Aufwand für die Ermittlung dieser Kennfelder eingespart werden. Gleichzeitig ermöglicht die Messung beider NOₓ-Konzentrationen eine Kontrolle des Abscheidegrades über die Zeit, was eine Warnmeldung bei zu starkem Abfall der Abscheideleistung ermöglicht.

## Patentansprüche

1. Verfahren zur selektiven katalytischen Reduktion von Stickoxiden aus Abgasen, vorzugsweise aus Abgasen von Kraftfahrzeugdieselmotoren unter getakteter überstöchiometrischer Zugabe von NH₃ oder NH₃-freisetzenden Stoffen, dadurch gekennzeichnet, daß die getaktete überstöchiometrische NH₃-Zugabe in der Weise gesteuert wird, daß die Zugabe nach ihrem Start erst dann wieder unterbrochen wird, wenn die im Katalysator gespeicherte NH₃-Menge einen bestimmten, entsprechend den Katalysatoreigenschaften und dem Katalysatorvolumen vorgegebenen, oberen Schwellenwert erreicht hat, wobei die gespeicherte NH₃-Menge aus der Differenz zwischen der dosierten NH₃-Menge und der abgeschiedenen NOₓ-Menge, bestimmt aus der NOₓ-Konzentration im Abgas und dem durchschnittlichen Abscheidegrad, berechnet wird und die NH₃-Zugabe erst wieder erneut einsetzt, wenn die in gleicher Weise bestimmte, im Katalysator gespeicherte NH₃-Menge einen vorgegebenen unteren Schwellenwert erreicht hat, wobei diese getaktete NH₃-Zugabe nach einer vorgestimmten Anzahl von Zyklen so lange unterbrochen wird, bis die, auf die beschriebene Weise bestimmte, im Katalysator gespeicherte NH₃-Menge vollständig oder zumindest weitgehend abreagiert ist, womit ein Gesamtzyklus der getakteten NH₃-Zugabe abgeschlossen ist.

2. Verfahren nach Anspruch 1, dadurch gekennzeichnet, daß die im Abgas enthaltene NOₓ-Konzentration näherungsweise aus den relevanten Prozeßparametern des Prozesses berechnet wird, in dem das Abgas entsteht, beim Dieselmotor insbesondere aus den Kennfeldern auf Basis von Motordrehzahl, Regelstangenweg und Ladedruck.

3. Verfahren nach den Ansprüchen 1 und 2, dadurch gekennzeichnet, daß der durchschnittliche Abscheidegrad bestimmt wird aus Abscheidungskennfeldern auf Basis der für die katalytische Reduktion relevanten Parameter, insbesondere der Katalysatortemperatur, der Abgasmenge, der NOₓ-Konzentration im Abgas und dem NH₃-Beladungszustand.

4. Verfahren nach den Ansprüchen 1 bis 3, dadurch gekennzeichnet, daß der obere und untere Schwellenwert für das Zu- bzw. Abschalten der NH₃-Zugabe in Form eines Kennfeldes, vorzugsweise eines Kennfeldes in Abhängigkeit von Motordrehzahl und Abgastemperatur vorgegeben wird.

5. Verfahren nach den Ansprüchen 1 bis 4, dadurch gekennzeichnet, daß die NOₓ-Konzentration hinter dem Katalysator gemessen wird und die Unterbrechung der NH₃-Dosierung nach der vorbestimmten Anzahl von Zyklen beendet wird, wenn ein vorgegebener Schwellenwert von der gemessenen NOₓ-Konzentration hinter dem Katalysator überschritten ist.

6. Verfahren nach den Ansprüchen 1 bis 5, dadurch gekennzeichnet, daß der Schwellenwert der NOₓ-Konzentration hinter dem Katalysator nach Anspruch 5 in Abhängigkeit der momentanen Werte der NOₓ-Konzentration vor dem Katalysator, der Abgasmenge und der Katalysatortemperatur bestimmt wird.

7. Verfahren nach den Ansprüchen 1 bis 6, dadurch gekennzeichnet, daß der Schwellenwert der NOₓ-Konzentration hinter dem Katalysator nach Anspruch 5 aus dem Abscheidungskennfeld nach Anspruch 3 so bestimmt wird, daß ein bestimmter, vorgegebener Wert des NH₃-Beladungszustandes nicht überschritten wird.

8. Verfahren nach den Ansprüchen 1 bis 7, dadurch gekennzeichnet, daß über den Gesamtzyklus die NOₓ-Konzentration im Abgas aus der gemessenen NOₓ-Konzentration hinter Katalysator, dem Abgasstrom und der zugegebenen NH₃-Menge berechnet wird und mit Hilfe dieses Rechenwertes die Berechnung der NOₓ-Konzentration im Abgas nach Anspruch 2 fortlaufend korrigiert wird.

9. Verfahren nach den Ansprüchen 1 bis 8, dadurch gekennzeichnet, daß das Abscheidungskennfeld nach Anspruch 3 über die gemessene NOₓ-Konzentration nach Anspruch 5 laufend korrigiert wird.

10. Verfahren nach den Ansprüchen 1 bis 9, dadurch gekennzeichnet, daß die Korrekturen nach den Ansprüchen 8 und 9 auf vorgegebene Prozentsätze von den Ausgangswerten begrenzt sind und das Erreichen dieser Grenzen gemeldet wird.

11. Verfahren nach den Ansprüchen 1 bis 10, dadurch gekennzeichnet, daß die vorgegebene Anzahl der Einzelzyklen eines Gesamtzyklus in Abhängigkeit der Größe der errechneten Korrekturen nach den Ansprüchen 8 und 9 vergrößert oder verkleinert wird.

12. Verfahren nach Anspruch 1 und den Ansprüchen 4 bis 11, dadurch gekennzeichnet, daß auch die NOₓ-Konzentration im Abgas gemessen wird und damit deren Berechnung nach Anspruch 2 entfällt, sowie die Berechnung des mittleren Abscheidegrades nach Anspruch 3 auf Basis der gemessenen NOₓ-Konzentrationen im Abgas und hinter dem Katalysator erfolgt.

13. Verfahren nach Anspruch 12, dadurch gekennzeichnet, daß der gemessene Abscheidegrad über die Betriebszeit statistisch ausgewertet wird und damit ein stärkerer Abfall des Abscheidegrades über die Betriebszeit angezeigt werden kann.

## Claims

1. A process for selective catalytic reduction of nitrogen oxides from exhaust gases, preferably those from diesel engines in vehicles, using pulsed superstoichiometric addition of NH₃ or NH₃-releasing substances, which comprises controlling the pulsed superstoichiometric addition of NH₃ in such a way that, after it has started, the addition is interrupted again only when the amount of NH₃ stored in the catalyst has reached a specific upper threshold value which is predetermined in accordance with the catalyst properties and the catalyst volume, the amount of NH₃ stored being calculated from the difference between the metered amount of NH₃ and the amount of NOₓ separated off, which is determined from the NOₓ concentration in the exhaust gas and the average degree of separation, and the addition of NH₃ is resumed only when the amount of NH₃ stored in the catalyst, which is determined in the same way, has reached a predetermined lower threshold value, this pulsed addition of NH₃ being interrupted after a predetermined number of cycles until the amount of NH₃ stored in the catalyst, which is determined in the manner described, has completely or at least substantially reacted, this completing one entire cycle of the pulsed addition of NH₃.

2. A process as claimed in claim 1, wherein the NOₓ concentration in the exhaust gas is calculated approximately from the relevant process parameters of the process in which the exhaust gas is formed, in particular, in the case of diesel engines, from the performance characteristics based on engine speed, control rod travel and loading pressure.

3. A process as claimed in claim 1, wherein the average degree of separation is determined from separation performance characteristics based on the relevant parameters for the catalytic reduction, in particular the catalyst temperature, the amount of exhaust gas, the NOₓ concentration in the exhaust gas and the NH₃ loading.

4. A process as claimed in claim 1, wherein the upper and lower threshold values for switching on and switching off the addition of NH₃ are specified in the form of performance characteristics, preferably performance characteristics as a function of engine speed and exhaust gas temperature.

5. A process as claimed in claim 1, wherein the NOₓ concentration downstream of the catalyst is measured and the interruption in NH₃ metering after the predetermined number of cycles is ended when the measured NOₓ concentration downstream of the catalyst exceeds a predetermined threshold value.

6. A process as claimed in claim 1, wherein the threshold value of the NOₓ concentration downstream of the catalyst as claimed in claim 5 is determined as a function of the instantaneous values of the NOₓ concentration upstream of the catalyst, the amount of exhaust gas and the catalyst temperature.

7. A process as claimed in claim 1, wherein the threshold value of the NOₓ concentration downstream of the catalyst as claimed in claim 5 is determined from the separation performance characteristics as claimed in claim 3 in such a way that a specific, predetermined value of the NH₃ loading is not exceeded.

8. A process as claimed in claim 1, wherein the NOₓ concentration in the exhaust gas is calculated over the entire cycle from the measured NOₓ concentration downstream of the catalyst, the exhaust gas flow and the amount of NH₃ added and the calculation of the NOₓ concentration in the exhaust gas as claimed in claim 2 is corrected continuously with the aid of this calculated value.

9. A process as claimed in claim 1, wherein the separation performance characteristics as claimed in claim 3 are corrected continuously via the measured NOₓ concentration as claimed in claim 5.

10. A process as claimed in claim 1, wherein the corrections as claimed in claim 8 and claim 9 are restricted to predetermined percentages of the initial values and a signal is given when these limits are reached.

11. A process as claimed in claim 1, wherein the predetermined number of individual cycles in an entire cycle is increased or decreased as a function of the magnitude of the calculated corrections as claimed in claim 8 and claim 9.

12. A process as claimed in claim 1, wherein the NOₓ concentration in the exhaust gas is also measured and the calculation thereof as claimed in claim 2 is therefore dispensed with, and the calculation of the average degree of separation as claimed in claim 3 is carried out on the basis of the measured NOₓ concentrations in the exhaust gas and downstream of the catalyst.

13. A process as claimed in claim 12, wherein the measured degree of separation over the operating period is evaluated statistically and a more substantial fall in the degree of separation over the operating period can therefore be indicated.

## Revendications

1. Procédé de réduction catalytique sélective d'oxydes d'azote de gaz d'échappement, de préférence de gaz d'échappement venant de moteurs diesels pour véhicules automobiles, avec addition surstoechiométrique cadencée de NH₃ ou de substances dégageant du NH₃, caractérisé en ce que l'addition sur-stoechiométrique cadencée de NH₃ est commandée de manière que l'addition soit ensuite réinterrompue après son démarrage, lorsque la quantité de NH₃ stockée dans le catalyseur a atteint une valeur de seuil supérieure déterminée, correspondant aux caractéristiques du catalyseur et au volume du catalyseur, la quantité de NH₃ stockée étant calculée à partir de la différence entre la quantité de NH₃ dosée et la quantité de NOₓ séparée, déterminée à partir de la concentration en NOₓ dans les gaz d'échappement et du degré moyen de séparation, et l'addition de NH₃ étant ensuite de nouveau établie lorsque la quantité d'NH₃ déterminée de la même manière et stockée dans le catalyseur a atteint une valeur de seuil inférieure prédéterminée, cette addition cadencée de NH₃ étant interrompue après écoulement d'un nombre prédéterminé de cycles, jusqu'à ce que la quantité de NH₃, déterminée de la manière décrite et stockée dans le catalyseur, ait été complètement ou au moins notablement consommée par réaction, un cycle global d'addition de NH₃ cadencé étant ainsi achevé.

2. Procédé selon la revendication 1, caractérisé en ce que la concentration de NOₓ contenue dans les gaz d'échappement est calculée approximativement à partir des paramètres importants du processus dans lequel se produisent les gaz d'échappement, en particulier, pour un moteur Diesel, à partir des caractéristiques se basant sur la vitesse de rotation du moteur, la course de la tige de commande et la pression de suralimentation.

3. Procédé selon les revendications 1 et 2, caractérisé en ce que le degré moyen de séparation est déterminé à partir des caractéristiques de séparation basées sur les paramètres importants pour la réduction catalytique, en particulier la température du catalyseur, la quantité de gaz d'échappement, la concentration en NOₓ dans les gaz d'échappement et l'état de charge en NH₃.

4. Procédé selon les revendications 1 à 3, caractérisé en ce que les valeurs de seuil supérieure et inférieure pour la mise en et hors service de l'addition de NH₃ sont prédéterminées sous la forme d'un champ de caractéristiques, de préférence d'une caractéristique dépendant de la vitesse de rotation du moteur et de la température des gaz d'échappement.

5. Procédé selon les revendications 1 à 4, caractérisé en ce que la concentration en NOₓ derrière le catalyseur est mesurée et l'interruption du dosage de NH₃ étant achevée au bout d'un nombre prédéterminé de cycles, lorsqu'une valeur de seuil supérieure prédéterminée de la concentration en NOₓ mesurée derrière le catalyseur est dépassée.

6. Procédé selon les revendications 1 à 5, caractérisé en ce que la valeur de seuil de la concentration en NOₓ derrière le catalyseur est déterminée, selon la revendication 5, en fonction des valeurs instantanées de la concentration en NOₓ du catalyseur, de la quantité de gaz d'échappement et de la température du catalyseur.

7. Procédé selon les revendications 1 à 6, caractérisé en ce que la valeur de seuil de la concentration en NOₓ derrière le catalyseur est déterminée, selon la revendication 5, à partir du champ de caractéristiques de séparation, selon la revendication 3, de manière qu'une valeur, déterminée au préalable, de l'état de charge en NH₃ ne soit pas dépassée.

8. Procédé selon les revendications 1 à 7, caractérisé en ce que l'on calcule sur la valeur totale du cycle la concentration en NOₓ dans les gaz d'échappement à partir de la concentration en NOₓ mesurée derrière le catalyseur, du débit de gaz d'échappement et de la quantité de NH₃ ajoutée et l'on corrige en continu, à l'aide de cette valeur calculée, le calcul de la concentration en NOₓ dans les gaz d'échappement, selon la revendication 2.

9. Procédé selon les revendications 1 à 8, caractérisé en ce que le champ de caractéristiques de séparation selon la revendication 3 est corrigé en continu sur la valeur de la concentration en NOₓ mesurée, selon la revendication 5.

10. Procédé selon les revendications 1 à 9, caractérisé en ce que les corrections selon les revendications 8 et 9, concernant les pourcentages prédéterminés, sont limitées par les valeurs initiales et l'atteinte de ces limites étant l'objet d'une information.

11. Procédé selon les revendications 1 et 10, caractérisé en ce que le nombre prédéterminé de cycles individuels d'un cycle total est augmenté ou diminué en fonction de l'ampleur des corrections calculées selon les revendications 8 et 9.

12. Procédé selon la revendication 1 et les revendications 4 à 11, caractérisé en ce qu'également est mesurée la concentration en NOₓ dans les gaz d'échappement et, ainsi, son calcul selon la revendication 2 est supprimé, faisant que le calcul du degré moyen de séparation selon la revendication 3 s'effectue d'après les concentrations en NOₓ, mesurées dans les gaz d'échappement et derrière le catalyseur.

13. Procédé selon la revendication 12, caractérisé en ce que le degré de séparation mesuré est évalué statistiquement sur la durée de fonctionnement et ainsi une chute plus forte du degré de séparation en fonction du temps de fonctionnement peut faire l'objet d'une indication.
